Europäisches Patentamt

(19) European Patent Office

Office européen des brevets

(11) Publication number: **0 136 828**
**A2**

# (12) EUROPEAN PATENT APPLICATION

(21) Application number: **84305995.7**

(22) Date of filing: **31.08.84**

(51) Int. Cl.⁴: **B 63 B 49/00**
**G 06 F 15/50**

(30) Priority: **01.09.83 GB 8323425**

(43) Date of publication of application:
**10.04.85 Bulletin 85/15**

(84) Designated Contracting States:
**AT BE CH DE FR GB IT LI LU NL SE**

(71) Applicant: **Bullock, Kenneth John**
**226 The Ridgeway**
**St. Albans, Herts. AL4 9XH(GB)**

(72) Inventor: **Bullock, Kenneth John**
**226 The Ridgeway**
**St. Albans, Herts. AL4 9XH(GB)**

(74) Representative: **Garratt, Peter Douglas et al,**
**Mathys & Squire 10 Fleet Street**
**London EC4Y 1AY(GB)**

(54) **Powered boat performance analyser.**

(57) A powered boat performance analyser is connected to engine speed, fuel flow and water speed transducers and provides a graphical display showing the range of the boat at any engine speed. The actual engine speed is also shown so that the user may see readily the effect on range of an inverse or decrease in speed. The display is continuously updated in a manner which lessens the effect of short term variations.

./...

FIG.1

## POWERED BOAT PERFORMANCE ANALYSER

This invention relates to a powered boat performance analyser for use in power boats and other powered water craft.

For any given power boat, there is a characteristic relationship between the rate of fuel consumption, the engine speed and the speed of the craft through the water. This relationship is commonly represented as a range/speed curve and is dependent upon such factors as the hull shape, the type of engine, the type of propellor and the load. Such range/speed curves are published for well known types of power boats and can be used on close analysis to identify, in different water speed ranges, engine speeds which are relatively economical in terms of fuel consumption. To give one example, an increase in engine speed at the point at which the craft is about to plane will increase the range, that is to say decrease the fuel consumption per unit distance. At other engine speeds, a small increase may well significantly reduce range.

It is not uncommon for a power boat to have a hull, engine and propellor obtained from different manufacturers and for such non-standard craft, published range/speed curves are unlikely to be available. Moreover, in striving for optimum performance, power boat users often change propellors and alter the trim of their craft. It would be of great benefit in such circumstances for accurate range/speed information to be available.

It is an object of this invention to provide an instrument for use in powered water craft which enables predictions to be made of the effect of a change in engine speed on the distance travelled per unit of fuel consumption or, with an assumed amount of fuel, the effect on range.

Accordingly, the present invention consists in a powered boat performance analyser, comprising processor means adapted to receive from transducers mounted on the boat information relating to engine speed, instantaneous rate of fuel consumption and water speed and to calculate at the current engine speed a range value which is proportional to water speed and inversely proportional to the rate of fuel consumption; storage means for storing an array of said calculated range values at respective different engine speeds and display means for displaying a representation of said array, thereby enabling a ready prediction to be made of the effect on range of a change in engine speed.

Suitably, the representation may be in graphical form having range value and engine speed as orthogonal coordinates.

Preferably, the display means further provides an indication of current engine speed in close proximity to said representation.

It is recognised that even without changes in the propellor, trim and the like, the characteristic range/speed curve is not strictly constant. It is affected, for example, by sea and wind conditions, by the loading of the boat and by how clean the hull is. For greater accuracy, therefore, it is desirable that the displayed representation of range values should be continuously updated so as faithfully to reflect current conditions.

Accordingly, in a preferred form of this invention, the processor means further comprises updating means arranged to compare the range value calculated at the current engine speed with the range value from the array corresponding with the same engine speed, and to update the array in accordance with said comparison.

This invention will now be described by way of example with reference to the accompanying drawings in which:

Figure 1 shows in diagrammatic form a performance analyser according to the present invention, connected with boat mounted transducers,

Figure 2 shows a typical display generated by the analyser of Figure 1, and

Figure 3 illustrates an alternative display mode.

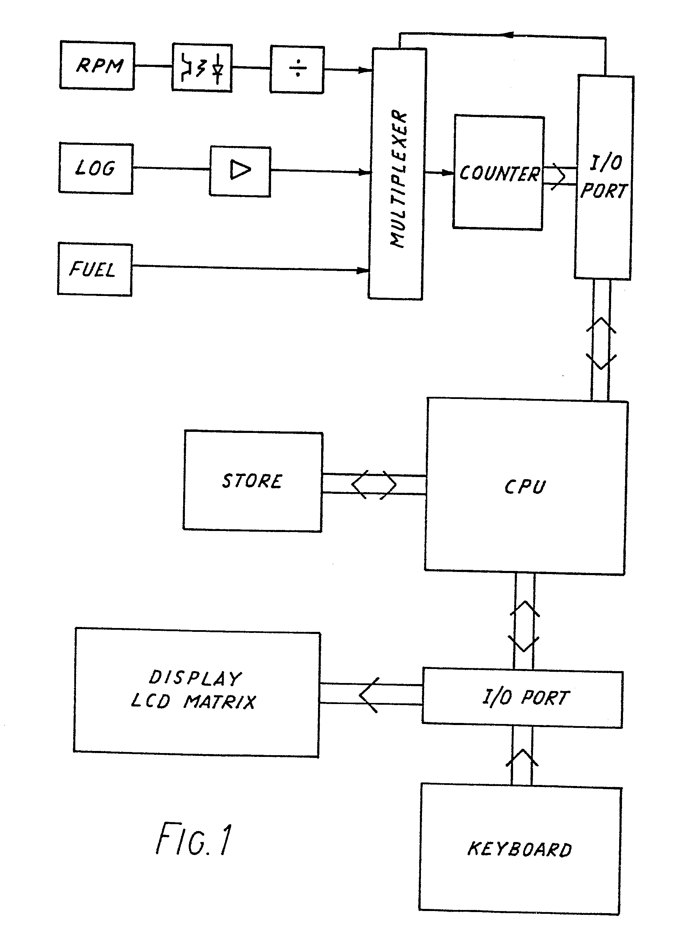

Referring initially to Figure 1, the analyser is connected to receive electrical signals from transducers in the craft. For engine speed, it will be possible to use the existing engine speed sensor with, for example, an optical isolator. Since different sensors may provide different pulse rate outputs for the same rpm, a divider is provided which can reduce the pulse rate by a selected factor. Similarly, the analyser may make use of the existing water speed sensor or log provided on the craft and will contain a preamplifier suitable for the particular type of log. It is unlikely that the power craft to which the analyser is to be fitted will have a fuel flow rate sensor and one will therefore be provided. This may for example take the form of a turbine flow meter having an optical revolution counter. It should be understood that for craft having two engines, two fuel flow sensors will be required with the aggregate fuel flow being presented to the processor. Alternatively, the analyser may be arranged to produce a separate range/speed curve for each engine. This allows comparisons to be made between engines and enables the analyser to continue to provide useful information even if one engine should fail. With diesel engines - or other arrangements in which there is a return flow of unused fuel - it may be necessary to provide two fuel flow sensors and to subtract the respective readings.

The transducer outputs, through the respective interfacing devices are taken to a Multiplexer unit under the control of a first input/output port (I/O) Each transducer output in turn is connected to a Counter providing the central processing unit (CPU) with a pulse rate indication of the engine speed, water speed or fuel flow as appropriate. Through the I/O the CPU can of course select from which transducer information is required.

The CPU is arranged to calculate, at increments of engine speed, a range value which is proportional to water speed divided by rate of fuel consumption. The constant of proportionality is, in this form of the invention, arbitrary. In one example, the working engine speed range of the craft is scaled in arbitrary units 1 to 80 and a range value is calculated at each thus defined speed unit. The range values and associated engine speeds are stored as an array in the store and it will be appreciated that as the craft is worked through up to its maximum engine speed, 80 different range values will be accumulated in the store. It will be appreciated that instead of storing actual range values, the water speed and fuel flow values at each speed unit may be stored and the equivalent range value calculated from these values as necessary.

The CPU is connected through a second input/output port with a Display Device and a Keyboard. The Display Device takes the form of a liquid crystal display (LCD) matrix device having, in the preferred example, a matrix size of 84 by 32. This LCD display is associated in a console with the keyboard which enables commands to be entered manually into the system.

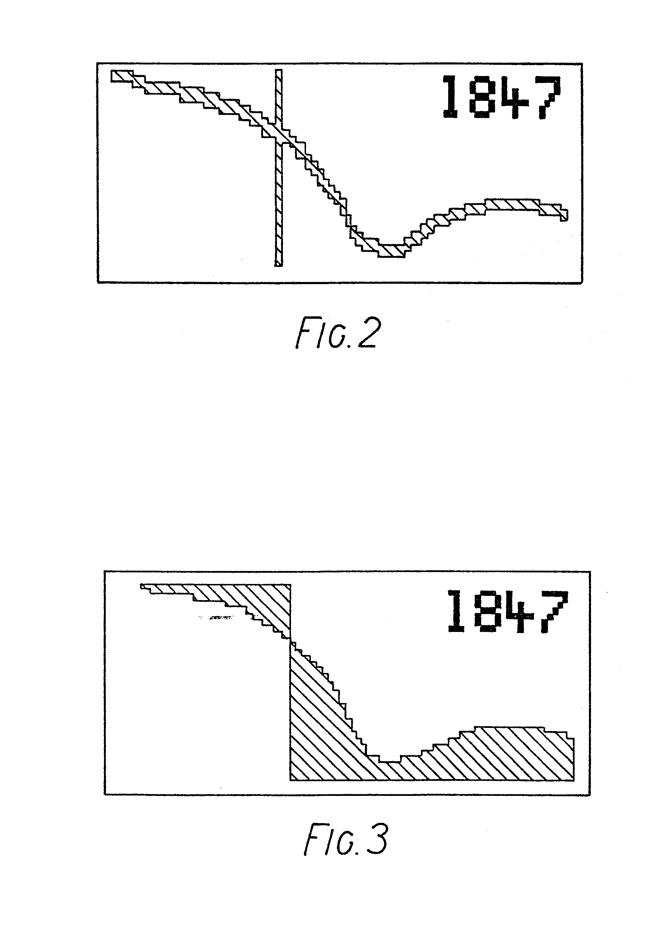

The range values held in the store are displayed graphically on the LCD device with engine speed on the x axis and range value on the y axis. This display is shown in Figure 2. In addition, the current engine speed is indicated as a vertical line at the corresponding position on the axis, and also digitally on the LCD device. The position of the digital rpm display on the LCD device (the upper right quadrant in the example of Figure 2) is selected by the CPU to avoid interference with the range/speed curve. In this way the space and further cost of an additional display device are saved.

It is a further feature of this instrument that the displayed range/speed curve is updated continuously with new data from the transducers so that the range/speed curve accurately reflects the prevailing wind and sea conditions, trim of the craft and the like. For cross-reference, however, it is possible to store one previously obtained array of range values. This enables comparison to be made of the performance before and after a change of trim, for example. The user is able to select from the keyboard either the current array or this past array, for display on the LCD device.

It would not be satisfactory to update the array merely by replacing the current calculated range value for the range value in the array corresponding with that engine speed. This would not produce a smooth range/speed curve and would over-emphasise short term changes in sea or wind conditions. The method of updating employed in the described device is to compare the calibrated range value with the corresponding range value in the array and to produce a difference value. This difference value is then divided by a predetermined strength parameter to produce a corrected difference. The range value in the array at the current RPM is increased or reduced by this corrected difference. In addition, the range values at neighbouring RPM values are updated with the corrected difference reduced by a spread factor. The power of this spread factor is 1 for adjacent RPM values, 2 for the next adjacent values and so on. The strength factor and the spread factor are selected to give a stable but reasonably fast acting adjustment to changing conditions.

The described smoothing will reduce the effects on the display of not only short term wind and sea variations but also certain atypical conditions such as advancing the throttle or throttles at too fast a rate for the boat to respond or putting engines into reverse to slow boat. Further steps are preferably taken to deal with other atypical conditions such as low speed manoeuvering, going astern or running engines solely for power generation. These further steps may include eliminating all date if speed is less than, say, 3 knots, if the rpm is less than say, 1200 or if the rate of change of rpm exceeds, say 500 rpm/sec.

It will be understood that the power boat user is able, through actual experimental data, to minimise fuel consumption in situations where speed is not of the essence or, when racing, to maximize speed within the constraints upon fuel consumption imposed by the limit of fuel carried. By using the capability of the instrument to store a past range/speed curve whilst calculating a new curve it is possible for the user to evaluate the effects on consumption of changes in the propellor or in the overall load distribution, for example.

It will be understood that this invention has been described by way of example only and a great variety of modifications are possible without departing from the scope of the invention. For example, the described display could be replaced by a display in bar graph form with the current engine speed being indicated by a reversal in display state of bars below and above the current engine speed. This alternative display mode is illustrated in Figure 3. Other modes of display will suggest themselves to the skilled reader. It is thought that the described, undimensioned display gives all the information that the user requires in order to meet the aims of this invention but a dimensioned display can of course be provided if thought necessary. With a dimensioned display, it will be possible for the current engine speed to be displayed separately from the range/speed curve - possibly on an existing RPM counter - although the described arrangement is considered to be preferable.

In addition to the graphical display of the range/speed curve, the analyser will be arranged, on suitable inputs from the keyboard, to display in digital form the current engine speed, water speed and rate of fuel consumption. Further quantities can also be displayed, such as total distance travelled, distance travelled in current journey leg, estimated time to complete a previously entered distance and so on. Alarms can be provided to give warning when preset limits of time distance or fuel consumption are exceeded. Although it is thought preferable that the analyser should make use, wherever possible, of sensors already existing on the boat, the analyser can alternatively be provided with a dedicated set of engine speed, water speed and fuel flow rate sensors. Interfacing devices as described above may then not be required or alternative forms of interface may be employed.

- 8 -

CLAIMS

1.    A powered boat performance analyser comprising processor means
adapted to receive from transducers mounted on the boat information
relating to engine speed, instantaneous rate of fuel consumption and
water speed and to calculate at the current engine speed a range value
which is proportional to water speed and inversely proportional to the
rate of fuel consumption; storage means for storing an array of said
calculated range values at respective different engine speeds and
display means for displaying a representation of said array, thereby
enabling a ready prediction to be made of the effect on range of a
change in engine speed.

2.    An analyser according to Claim 1, wherein the representation is
in graphical form having range value and engine speed as orthogonal
coordinates.

3.    An analyser according to Claim 2 wherein the display means
further provides an indication of current engine speed adjacent said
curve.

4.    An analyser according to Claim 3 wherein said indication of
current speed takes the form of an ordinate or straight line extension
thereof.

5.    An analyser according to any one of the preceding claims wherein
the display means provides a digital indication of current engine
speed at a position selected by the processor means to avoid
interference with said representation.

6.    An analyser according to any one of the preceding claims in which
the processor means further comprises updating means arranged to
compare the range value calculated at the current engine speed with
the range value from the array corresponding with the same speed and
to update the array in accordance with said comparison.

7. An analyser according to any one of the preceding claims wherein said storage means is arranged to store a past array of range values, the display means serve to display either the current array or the past array, as selected.

8. An analyser according to any one of the preceding claims wherein said display means comprises a dot matrix display device.

9. A method of analysing the performance of a powered boat to facilitate a prediction of the effect on range of a change in engine speed, comprising the steps of receiving information relating to engine speed, instantaneous rate of fuel consumption and water speed; calculating at the current engine speed a range value which is proportional to water speed and inversely proportional to the rate of fuel consumption; storing an array of range values at respective different engine speed and displaying a graphical representation of said array.

10. A method according to Claim 9 comprising the further step of comparing the range value calculated at the current engine speed with the range value from the array corresponding with the same speed and updating the array in accordance with said comparison.

FIG.1

FIG.2

FIG.3